# FASCICULE DE BREVET EUROPEEN

(11) **EP 2 247 936 B1**
(45) Date de publication et mention de la délivrance du brevet: **31.08.2011**
(21) Numéro de dépôt: 09720983.7
(22) Date de dépôt: 25.02.2009
(51) Int. Cl.: G01N 3/56

(54) **DISPOSITIF DE TEST D'UN REVETEMENT POUR PIED D'AUBE**
VORRICHTUNG ZUM TESTEN DER BESCHICHTUNG EINES SCHAUFELSOCKELS
DEVICE FOR TESTING THE COATING OF A VANE BASE

(30) Priorité: 25.02.2008 FR 0851183
(43) Date de publication de la demande: 10.11.2010
(73) Titulaire: Snecma, 75015 Paris (FR)
(72) Inventeur: BASSOT, Alain, F-77590 Bois Le Roi (FR); DUDON, Laurent, F-91170 Viry-Chatillon (FR); PERRIAU, Anne-claire, F-77000 Vaux Le Penil (FR)
(74) Mandataire: Intès, Didier Gérard André
(86) Numéro de dépôt international: PCT/FR2009/050296
(87) Numéro de publication internationale: WO 2009/112757

(56) Documents cités:
- EP-A- 1 598 655
- EP-A- 1 705 261
- US-A- 3 802 255
- US-B1- 6 250 166

## Description

L'invention concerne le domaine des revêtements antifrictions appliqués sur des pieds d'aubes de machines tournantes, et le contrôle qualité de ceux-ci. Plus précisément, l'invention concerne un dispositif de test d'un revêtement susceptible de revêtir un pied d'aube de rotor de turbomachine. Il peut s'agir d'une turbomachine terrestre ou aéronautique, et notamment d'un turboréacteur ou d'un turbopropulseur d'avion.

Les aubes, et en particulier les aubes de soufflante dans les turbomachines aéronautiques sont des pièces mécaniques extrêmement sollicitées. Pour cette raison, le pied d'aube qui est la partie de maintien de l'aube est une partie particulièrement critique de la pièce. Le pied d'aube comporte des surfaces de contact avec le disque de rotor, ou portées, qui sont soumises en fonctionnement à des pressions et des températures élevées. Pour réduire les contraintes et notamment les contraintes de cisaillement qui sont appliquées sur les portées des pieds d'aube, on utilise de manière connue des revêtements antifrictions. Ces revêtements dits revêtements antifretting, peuvent être déposés notamment par projection thermique. Ils peuvent être multi-couches.

Comme les défaillances sur les portées de pied d'aube, par exemple par apparition de fissures, sont un des modes principaux de défaillance des aubes, la qualité du revêtement antifrictions est essentielle. Pour s'assurer de la qualité de ce revêtement, et de la tenue de ce revêtement sur son interface avec l'aube elle-même, on procède de manière connue à des tests micrographiques, consistant à faire une coupe du revêtement et du pied d'aube et d'examiner au microscope l'aspect de cette coupe. Il est également connu de tester la qualité du revêtement par des tests standards de dureté, des tests d'adhérence en traction ou un cisaillement, ou encore d'effectuer des mesures d'épaisseurs.

Parmi les tests connus figurent également les tests divulgués par les documents EP 1 705 261, US 6250166, US 3802255 et EP 1598655. Il est toutefois apparu que ces différents tests s'avèrent insuffisantes pour distingue des revêtements de qualité supérieure par rapport à des revêtements de qualité simplement convenable, et se faire une idée précise de la durée de vie et la tenue mécanique en service du revêtement déposé sur le pied d'aube.

Si l'on appelle cycle pour une aube (ou un pied d'aube) l'ensemble des sollicitations auxquelles celle-ci est soumise pendant une phase de fonctionnement (pendant un vol dans le cas d'un turboréacteur monté sur un avion), c'est-à-dire du démarrage jusqu'à l'arrêt, alors le constat précédent revient à dire que les tests actuels ne permettent pas de distinguer qualitativement les différents revêtements dès lors qu'ils résistent de manière satisfaisante à un certain nombre de cycles.

Le but de l'invention est de définir un dispositif de test d'un revêtement susceptible de revêtir un pied d'aube de rotor de turbomachine, permettant la réalisation d'un test plus discriminant que les tests précédents quant à la qualité des revêtements testés, et dont les résultats soient fortement corrélés avec les constats réels de tenue dans le temps des revêtements de pieds d'aubes, tels que constatés sur l'ensemble de la vie d'une aube soit couramment de 10 000 à 15 000 cycles.

Ce but est atteint grâce au fait que le dispositif comprend deux demi-éprouvettes, chacune présentant une portée revêtue dudit revêtement, une contre-éprouvette présentant deux portées, et une machine comportant un premier système de maintien pour maintenir la contre-éprouvette suivant un axe de traction, un second système de maintien pour maintenir les demi-éprouvettes autour de la contre-éprouvette, et des moyens de traction pour soumettre les systèmes de maintien à des cycles de traction prédéterminés suivant l'axe de traction, pendant lesquels l'effort de traction est transmis d'un système de maintien à l'autre via les portées respectives en contact de la contre-éprouvette et des demi-éprouvettes ; et que le second système de maintien comporte des moyens de rappel élastique autorisant l'écartement des deux demi-éprouvettes dans une direction perpendiculaire à la direction de traction en réponse à une force d'écartement exercée sur ces deux demi-éprouvettes par la contre-éprouvette lors d'un cycle de traction.

Le principe du test ainsi défini est fondamentalement différent des tests précédemment connus. En effet, il consiste à soumettre des éprouvettes revêtues à des tests de fatigue représentatifs des sollicitations auxquelles les pieds d'aubes sont exposés pendant la vie de l'aube. Avantageusement, le dispositif ne nécessite pas l'utilisation d'aubes réelles mais simplement l'utilisation de demi-éprouvettes, chacune présentant une portée couverte du revêtement à tester. On notera qu'il est parfaitement possible en outre que chaque demi-éprouvette présente non seulement une, mais plusieurs portées, la contre-éprouvette comportant alors une portée correspondant à chacune de ces portées des deux demi-éprouvettes.

Les premier et second systèmes de maintien maintiennent respectivement les demi-éprouvettes et la contre-éprouvette en regard les unes de l'autre, de manière à faire coïncider leurs portées. Les systèmes de maintien sont alors soumis à des mouvements de traction relatifs l'un par rapport à l'autre par des moyens connus, de manière à soumettre les portées et notamment les portées des demi-éprouvettes à des sollicitations représentatives de celles qu'éprouve un pied d'aube en fonctionnement.

Ces sollicitations sont simulées par des cycles de traction au cours desquels on impose à la contre-éprouvette des efforts dans la direction de traction. Ces efforts varient en fonction du temps suivant un cycle prédéterminé, dit cycle de traction. Préférentiellement, pour chaque cycle de traction, on fait croître la traction depuis une valeur initiale nulle, ou du moins faible (par rapport à la valeur maximale) jusqu'à une valeur maximale, puis l'on revient à la valeur initiale. La valeur initiale et la valeur maximale peuvent éventuellement, l'une et/ou l'autre indépendamment, être maintenues pendant une certaine durée. Naturellement, d'autres profils de cycles de traction sont envisageables, selon la manière dont on veut simuler les différentes phases de fonctionnement de la turbomachine. Le paramètre de vitesse de montée en charge, c'est-à-dire l'augmentation de la force de traction par unité de temps, peut aussi être utilisé comme variable susceptible d'être optimisée.

De manière connue, la fixation d'une aube sur un disque rotor est faite en général par un accouplement tenon/mortaise formant une attache. Cette attache est constituée par un tenon aménagé sur une extrémité radialement intérieure de l'aube, le pied d'aube, qui est fixé dans une mortaise prévue sur la périphérie du disque rotor. Les pieds d'aubes d'une part, les tenons ou protubérances de disque rotor formés entre les mortaises de disque rotor d'autre part, ont ainsi respectivement des formes complémentaires en queue d'aronde, et sont disposés radialement en sens opposé de manière à assurer la fixation mutuelle entre les aubes et le disque rotor.

Dans une roue à aubes, les aubes sont régulièrement attachées sur la périphérie extérieure du disque rotor, qui comporte ainsi autant d'alvéoles de fixation et de tenons en queue d'aronde qu'il y a d'aubes à fixer.

Les attaches des aubes sur le disque rotor forment ainsi un motif qui se répète dans le sens circonférentiel et qui comprend le tenon en queue d'aronde du disque rotor avec les deux demi-pieds d'aubes qui enserrent celui-ci dans la roue à aubes. C'est ce motif que reproduit la contre-éprouvette enserrée par les deux demi-éprouvettes.

Comme cela a été dit, dans la machine de test intégrée au dispositif, le second système de maintien comporte des moyens de rappel élastique autorisant l'écartement des deux demi-éprouvettes dans une direction perpendiculaire à la direction de traction en réponse à une force d'écartement exercée sur ces deux demi-éprouvettes par la contre-éprouvette lors d'un cycle de traction. En effet, pendant un cycle de traction, notamment lorsque les portées des demi-éprouvettes et/ou de la contre-éprouvette sont obliques, la contre-éprouvette appuie sur les demi-éprouvettes, et peut tendre à écarter les demi-éprouvettes dans une direction transversale, perpendiculaire à la direction de traction. Pour empêcher cela, avantageusement le second système de maintien comporte les moyens de rappel élastique précités, qui permettent de maintenir des positions relatives de la contre-éprouvette et des demi-éprouvettes qui soient représentatives des positions réelles du pied d'aube et d'un tenon de disque de rotor dans une turbomachine.

Selon un mode de réalisation, les portées des demi-éprouvettes sont obliques par rapport à l'axe de traction, de manière à être représentatives de la forme des portées d'un pied d'aube de rotor de turbomachine. Ainsi, l'angle formé par la portée des demi-éprouvettes est représentatif de celui que forme une portée de pied d'aube dans une turbomachine par rapport à la direction radiale de celui-ci. Avantageusement, l'angle des portées par rapport à la direction de traction peut être voisin de 45 ° ; plus généralement, cet angle peut varier entre 30 et 60°.

En outre, les demi-éprouvettes peuvent être représentatives d'un pied d'aube non seulement par la forme de leurs portées, mais aussi par leur matériau. Ainsi, habituellement on fabrique les demi-éprouvettes dans le même matériau que le pied d'aube, typiquement dans un alliage à base de titane ou de nickel.

Pour les mêmes raisons, on peut également choisir un matériau identique à celui du disque de rotor pour la contre-éprouvette, soit également dans un alliage à base de titane ou de nickel. Cela permet une représentation plus fidèle du comportement du pied d'aube par rapport au disque de rotor.

Selon un mode de réalisation, les portées de la contre-éprouvette sont obliques par rapport à l'axe de traction de manière à être représentatives de la forme des portées d'un tenon d'un disque de rotor de turbomachine. Ainsi, l'angle formé par la portée de la contre-éprouvette est représentatif de celui que forme une portée de tenon de disque de rotor dans une turbomachine par rapport à la direction radiale de celui-ci. De ce fait, la sollicitation que la portée de la contre-éprouvette applique à la demi-éprouvette est représentative de celle que la portée d'un tenon de disque de rotor applique à la portée du pied d'aube, dans une turbomachine. De préférence, les portées de la contre-éprouvette sont inclinées d'un angle compris entre 30 et 60°, et l'on retient en général un angle voisin de 45°.

Selon un mode de réalisation, les moyens de rappel élastique comportent au moins un barreau constitué d'un matériau élastique, se déformant tout en restant dans son domaine de déformation élastique pendant les cycles de traction. Le barreau possède ainsi une certaine capacité de déformation, qui permet à la machine de représenter, de simuler les déformations effectivement constatées en fonctionnement dans la turbomachine, que ce soient les déformations du pied d'aube et/ou du tenon du disque de rotor. Grâce à cette possibilité d'écartement des deux demi-éprouvettes, la représentativité des résultats obtenus grâce au dispositif de test est encore augmentée.

Selon une variante du mode de réalisation précédent, le second système de maintien comporte deux montants parallèles à l'axe de traction et servant à maintenir les deux demi-éprouvettes, ledit barreau reliant ces montants suivant une direction perpendiculaire à l'axe de traction. Les deux montants parallèles à l'axe de traction, au voisinage des demi-éprouvettes, permettent de garantir le maintien en position de celles-ci pendant les cycles de traction. Il est pour cela préférable que les demi-éprouvettes soient relativement allongées, pour faciliter leur blocage en rotation.

D'autre part, comme les efforts d'écartement dans une direction transversale à la direction de traction passent par ledit au moins un barreau, on peut dimensionner celui-ci facilement en fonction des efforts d'extension qu'il est amené à subir et de l'allongement considéré comme admissible sous l'effet de ces efforts.

Selon une variante du mode de réalisation précédent, le dispositif de test comporte en outre des moyens de mesure de l'écartement des demi-éprouvettes pendant l'essai. Il est ainsi possible à tout moment de s'assurer que les positions relatives de la contre-éprouvette et des demi-éprouvettes correspondent bien à ce qui a été envisagé.

Selon un mode de réalisation, les demi-éprouvettes ont au voisinage de leurs portées une forme représentative de demi-pieds d'aubes de rotor de turbomachine, et l'axe de traction est disposé sensiblement suivant la direction radiale des demi-pieds d'aubes. Cette disposition permet que les demi-éprouvettes soient testées dans des conditions reproduisant fidèlement les conditions de fonctionnement et de sollicitation réelles. De plus, la simulation du comportement du revêtement pour pied d'aube ne se limite pas à la zone proprement dite du revêtement, mais intègre la partie du pied d'aube située au voisinage de la ou des portées.

Selon un mode de réalisation, de même la contre-éprouvette a au voisinage de ses portées une forme représentative de la forme d'un tenon d'un disque de rotor de turbomachine. Dans ce cas, l'action de la contre-éprouvette qui reproduit celle du tenon de disque de rotor sur le pied d'aube est plus réaliste, car elle est apte à reproduire le comportement du tenon de disque de rotor, non seulement dans le voisinage immédiat de la ou des portées, mais sur toute la partie du tenon située au voisinage des portées, c'est-à-dire habituellement toute l'extrémité de la contre-éprouvette en forme de tenon.

On notera que dans le dispositif, de manière plus ou moins fidèle suivant le mode de réalisation retenu, les demi-éprouvettes qui se font face sont assimilables aux faces opposées d'un pied d'aube, la contre-éprouvette étant pour sa part assimilable au tenon du disque de rotor servant à fixer l'aube sur le rotor. Ainsi, alors que sur une turbomachine c'est le pied d'aube qui est enserré et fixé entre deux tenons du disque de rotor, en revanche, dans la machine de test ce sont les deux demi-éprouvettes qui enserrent de part et d'autre une contre-éprouvette représentant un tenon du disque de rotor. Il a été constaté que malgré cette disposition apparemment inversée, une excellente représentativité des résultats est obtenue.

Selon un mode de réalisation, le côté des demi-éprouvettes situé du côté de la contre-éprouvette est sans contre-dépouille. Celles-ci sont donc économiques car elles peuvent être usinées simplement en usinage 3 axes. Il en va de même pour la contre-éprouvette. Les demi-éprouvettes peuvent même en outre être de forme extérieure convexe du côté de la contre-éprouvette.

Enfin, on notera qu'en outre, les déplacements des éprouvettes suivant la direction de traction peuvent être mesurés et enregistrés par un système de mesure de déplacement comme un comparateur ou une jauge.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
la figure 1 est une vue en coupe axiale d'un dispositif de test selon l'invention ;
les figures 2A et 2B sont des vues en coupe de la partie centrale de ce dispositif, respectivement de face et de côté ; et
la figure 3 est une vue en coupe axiale des zones de portées de la contre-éprouvette et des demi-éprouvettes du dispositif de test.

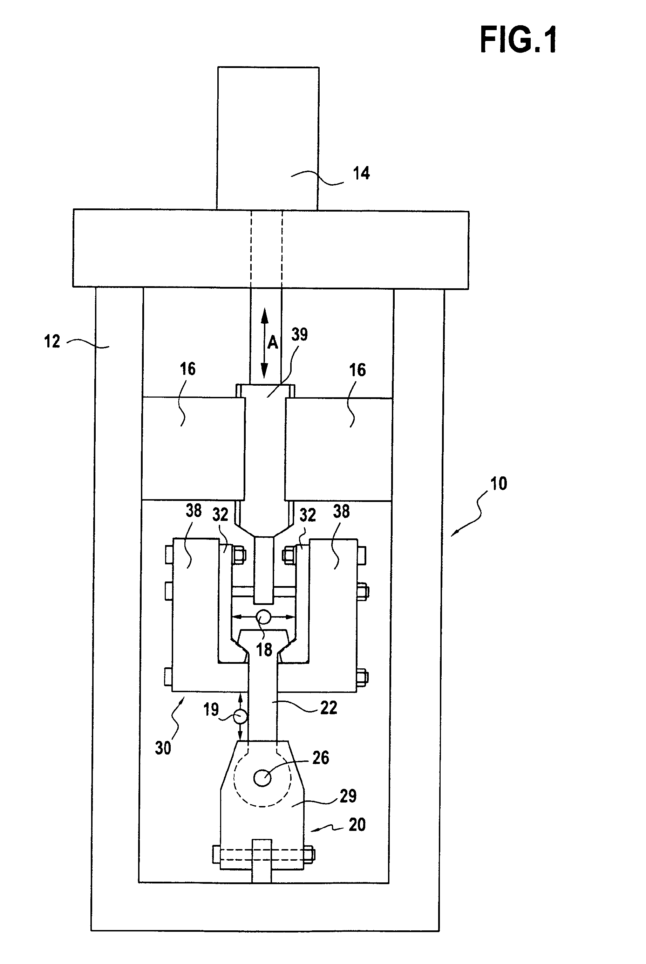

En faisant référence à la figure 1, un dispositif de test 10 d'un revêtement susceptible d'être appliqué sur un pied d'aube selon l'invention va maintenant être décrit. Ce dispositif 10 comporte une machine comportant tout d'abord une structure porteuse 12 généralement constituée par un bâti mécano-soudé. Cette structure porteuse 12 supporte deux systèmes de maintien 20 et 30.

Le premier système de maintien 20 situé dans la partie basse de la machine comporte une colonne fixe 29 qui maintient en position la contre-éprouvette 22. La contre-éprouvette 22 comporte un perçage dans lequel passe un axe 26 du premier système de maintien, axe grâce auquel la contre-éprouvette 22 est maintenue quelles que soient les sollicitations en traction qu'elle reçoit.

Le deuxième système de maintien 30 sert à maintenir en position deux demi-éprouvettes 32. Ce deuxième système de maintien 30 comporte une poutre mobile 39 mise en mouvement alternatif de translation rectiligne dans la direction verticale suivant la double flèche A par un actuateur linéaire 14 ou tout autre moyen d'actuation équivalent. Cette poutre 39 est guidée dans son mouvement alternatif de translation par les glissières 16. Le système de maintien 30 comporte en outre des moyens pour lier rigidement les demi-éprouvettes 32 par rapport à la poutre 39, qui comportent notamment les montants 38 cités précédemment.

Les caractéristiques de l'actuateur linéaire 14 sont choisies de telle sorte que celui-ci puisse imprimer au deuxième système de maintien 30 par rapport au premier 20 des mouvements de translation qui sont représentatifs de ceux qu'effectue une aube et plus précisément le pied de l'aube par rapport au disque de rotor pendant le fonctionnement de la turbomachine à laquelle l'aube appartient. Ces mouvements sont dus aux forces centrifuges considérables reçues par les aubes lors de la rotation du moteur, assimilables à une traction radiale sur l'aube.

Habituellement, on cherche à reproduire les conditions de fonctionnement du pied d'aube, aussi bien par les efforts notamment radiaux qui lui sont imposés, que par l'amplitude des mouvements du pied d'aube. L'amplitude de ces derniers mouvements dépend des pièces qui interagissent avec le pied d'aube ; celles-ci sont donc de grande importance pour la qualité du test. Dans la machine présentée, ces pièces sont d'un côté les montants de maintien 38, et de l'autre côté (sur le côté interne), la contre-éprouvette 22 qui est assimilable au tenon du disque de rotor, chargée dans une turbomachine de maintenir les aubes. On notera cependant que le dispositif peut être utilisé pour tester les revêtements dans des directions, ou avec des forces de traction, qui soient différentes des conditions habituelles de sollicitation du pied d'aube et de ses portées.

Pour la structure porteuse 12 et l'actuateur linéaire 14 de la machine selon l'invention, on peut utiliser des composants standards utilisés habituellement dans des machines de test cyclique en traction de pièces mécaniques. Les cycles à reproduire ont généralement les caractéristiques suivantes : Nombre de cycle pouvant aller jusqu'à 10 000 ou 15 000 cycles ; force maximale appliquée variant entre 15 000 et 30 000 daN.

La contre-éprouvette 22 comporte un trou 24 et le premier système de maintien comporte un axe 26 par lequel la contre-éprouvette 22 est maintenue quelles que soient les sollicitations en traction qu'elle reçoit.

Enfin, les déplacements relatifs des demi-éprouvettes par rapport à la contre-éprouvette sont mesurés et enregistrés par un système de mesure 19.

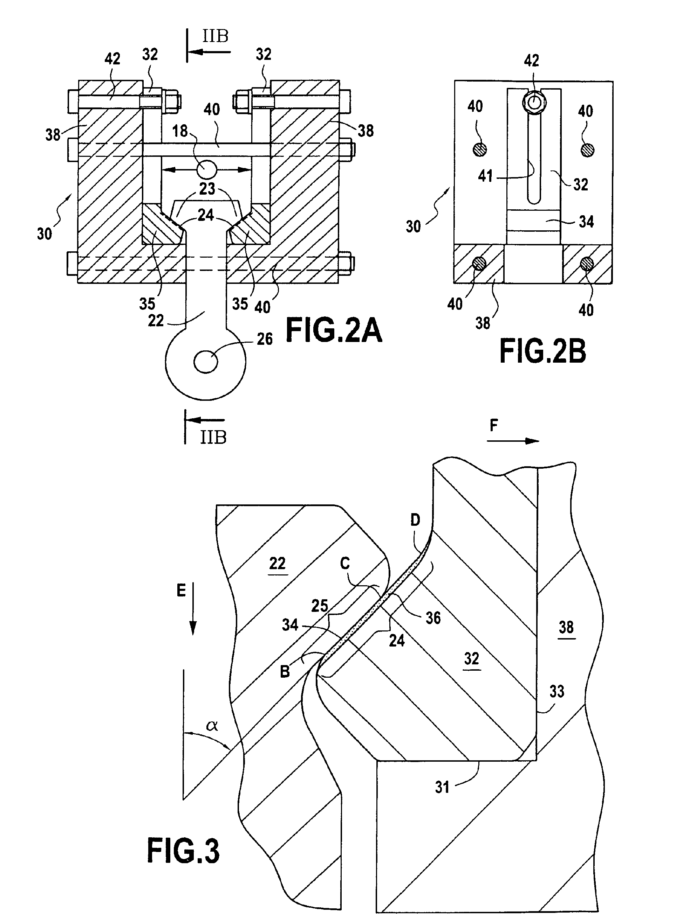

En faisant référence aux figures 2A et 2B, le fonctionnement de la partie centrale du dispositif de test selon l'invention va maintenant être décrit. La figure 2A est une vue en coupe présentant les deux demi-éprouvettes 32, maintenues d'une part dans le deuxième système de maintien 30 (montants 38), et d'autre part par la contre-éprouvette 22. Le rôle du deuxième système de maintien 30 est de maintenir les deux demi-éprouvettes et plus précisément les portées 24 de celles-ci en face des portées correspondantes (ref.25, Fig.3) de la contre-éprouvette 22, et de transmettre aux demi-éprouvettes 32 un mouvement alternatif de translation par rapport à la contre-éprouvette 22.

La contre-éprouvette 22, à l'une de ses extrémités (celle du haut sur la figure 1), présente un bulbe relativement symétrique dont les côtés 23 débordent en porte-à-faux de part et d'autre de son axe. Les surfaces extérieures basses (au sens de la figure 1) de ces côtés 23 sont les surfaces de contact ou portées de la contre-éprouvette 22. Ces portées reproduisent la forme du tenon de disque de rotor du turbomachine sur laquelle le pied d'aube est monté. A son autre extrémité, la contre-éprouvette 22 présente des moyens de fixation, permettant sa fixation sur la machine de test à l'aide de premiers moyens de maintien de celle-ci servant à maintenir et fixer la contre-éprouvette pendant les tests de traction. Ces moyens de maintien comportent ici un perçage 24, prévu pour faire passer un axe de fixation de la machine de test.

Les portées 24 des demi-éprouvettes 32 se trouvent sur les faces supérieures inclinées de renflements 35 formés sur la base des demi-éprouvettes 32. Ces portées sont des surfaces de contact assimilables aux portées d'un pied d'aube. Lorsque le deuxième système de maintien est sollicité en traction vers le haut (au sens de la figure 1), les portées respectives 24 des demi-éprouvettes et 25 de la contre-éprouvette rentrent en contact et ce faisant s'opposent au déplacement vers le haut du deuxième système de maintien 30, ce qui permet de tester, de mettre à l'épreuve le revêtement 34 déposé sur les portées 24 des demi-éprouvettes.

Alors que les demi-éprouvettes 32 et la contre-éprouvette 22 sont consommées par les essais puisque l'essai conduit à leur déformation, en revanche les autres pièces de la machine sont des pièces réutilisables.

Le second système de maintien 30 comporte deux montants 38 parallèles à l'axe de traction et servant à maintenir les deux demi-éprouvettes, chacun étant fixé à une demi-éprouvette 32. Cette fixation peut être faite notamment grâce à des boulons 42. Les boulons 42 traversent d'une part le montant 38 et sont de plus fixés à travers la demi-éprouvette 32 dans un perçage, un oblong ou encore un oblong débouchant 41 comme représenté sur la figure 2B.

Même s'il est possible que les deux montants 38 soient fixés rigidement l'un à l'autre ou même ne forment qu'une pièce unique, en revanche avantageusement ils peuvent constituer des parties indépendantes du deuxième système de maintien 30.

Par deux parties indépendantes, il faut comprendre ici que les deux montants 38 peuvent s'écarter latéralement l'un par rapport à l'autre. Cet écartement se fait dans la direction perpendiculaire à la direction de traction et perpendiculaire aux différentes portées du pied d'aube. Ce degré de liberté permet de mieux reproduire les conditions de maintien de l'aube en fonctionnement.

Avantageusement, l'écartement des deux parties du système de maintien est limité par des moyens de rappel élastique. Ces moyens de rappel élastique sont constitués par quatre barreaux métalliques 40, qui se déforment pendant les cycles de traction tout en restant dans leur domaine de déformation élastique. Ces barreaux 40 relient les montants 38 suivant une direction perpendiculaire à l'axe de traction. Ils sont filetés à leurs extrémités libres, de manière à être fixés par boulonnage.

Pour contrôler le bon fonctionnement des cycles de traction auxquels sont soumis les pieds d'aube, la machine comporte en outre des moyens 18 de mesure de l'écartement des demi-éprouvettes pendant l'essai. Cette mesure permet de s'assurer du bon fonctionnement et du bon positionnement des différentes pièces au cours de l'essai.

En faisant référence à la figure 3, les formes relatives de la contre-éprouvette 32 et de la demi-éprouvette 32 vont être précisées. La demi-éprouvette 32 est figurée en appui sur le montant 38. La demi-éprouvette 32 comporte une portée 24 qui s'étend entre un point B et un point D. La contre-éprouvette comporte également une portée 25, qui fait face à la portée 24 de la demi-éprouvette 32. La portée 24 de la demi-éprouvette est revêtue d'un revêtement de même nature et appliqué suivant la même méthode que la zone correspondante du pied d'aube. Dans la position relative de la demi-éprouvette 32 et de la contre-éprouvette 22, il n'y a contact que sur une zone de contact faisant partie de la portée 24 de la demi-éprouvette, entre les points B et C. Naturellement, au cours du test de traction, la position de cette zone de contact varie par rapport à la portée.

Comme on le voit sur la figure 3, les portées de l'éprouvette 22 et de la demi-éprouvette 32 sont disposées dans une direction oblique ou inclinée par rapport à la direction E, qui est la direction de traction. Cette inclinaison est celle que l'on retrouve au niveau de la fixation du pied d'aube sur le disque de rotor. L'angle d'inclinaison α est voisin de 45°.

## Revendications

1. Dispositif (10) de test d'un revêtement (36) susceptible de revêtir un pied d'aube de rotor dé turbomachine, le dispositif comprenant deux demi-éprouvettes (32), chacune présentant une portée (24) revêtue dudit revêtement, une contre-éprouvette (22) présentant deux portées (25), et une machine de test comportant un premier système de maintien (20) pour maintenir la contre-éprouvette (22) suivant un axe de traction (A), un second système de maintien (30) pour maintenir les demi-éprouvettes (32) autour de la contre-éprouvette (22), des moyens de traction (14) pour soumettre les systèmes de maintien à des cycles de traction prédéterminés suivant l'axe de traction, pendant lesquels l'effort de traction est transmis d'un système de maintien à l'autre via les portées (25,24) respectives en contact de la contre-éprouvette et des demi-éprouvettes ; le dispositif **se caractérisant en ce que** le second système de maintien comporte des moyens (40) de rappel élastique autorisant l'écartement des deux demi-éprouvettes dans une direction perpendiculaire à la direction de traction en réponse à une force d'écartement exercée sur ces deux demi-éprouvettes par la contre-éprouvette lors d'un cycle de traction.

2. Dispositif de test selon la revendication 1, **caractérisé en ce que** le côté des demi-éprouvettes (32) situé du côté de la contre-éprouvette (22) est sans contre-dépouille.

3. Dispositif de test selon la revendication 1 ou 2, **caractérisé en ce que** les portées (24) des demi-éprouvettes sont obliques par rapport à l'axe de traction, de manière à être représentatives de la forme des portées d'un pied d'aube de rotor de turbomachine.

4. Dispositif de test selon l'une quelconque des revendications 1 à 3, **caractérisé en ce que** les portées (25) de la contre-éprouvette (22) sont obliques par rapport à l'axe de traction de manière à être représentatives de la forme des portées d'un tenon d'un disque de rotor de turbomachine.

5. Dispositif de test selon l'une quelconque des revendications 1 à 4, **caractérisé en ce que** lesdits moyens de rappel élastique comportent au moins un barreau (40) constitué d'un matériau élastique, se déformant tout en restant dans son domaine de déformation élastique pendant les cycles de traction.

6. Dispositif de test selon l'une quelconque des revendications 1 à 5, **caractérisé en ce que** le second système de maintien (30) comporte deux montants parallèles (38) à l'axe de traction et servant à maintenir les deux demi-éprouvettes (32), ledit barreau reliant ces montants suivant une direction perpendiculaire à l'axe de traction.

7. Dispositif de test selon l'une quelconque des revendications 1 à 6, **caractérisé en ce qu'**elle comporte en outre des moyens (18) de mesure de l'écartement des demi-éprouvettes pendant l'essai.

8. Dispositif de test selon l'une quelconque des revendications 1 à 7, **caractérisé en ce que** les demi-éprouvettes (32) ont au voisinage de leurs portées une forme représentative de demi-pieds d'aubes de rotor de turbomachine, et l'axe de traction est disposé sensiblement suivant la direction radiale desdits demi-pieds d'aubes.

9. Dispositif de test selon l'une quelconque des revendications 1 à 8, **caractérisé en ce que** la contre-éprouvette (22) a au voisinage de ses portées une forme représentative de la forme d'un tenon d'un disque de rotor de turbomachine.

10. Dispositif de test selon l'une quelconque des revendications 1 à 9, **caractérisé en ce que** la contre-éprouvette est formée dans un alliage à base de titane ou de nickel.

11. Dispositif de test selon l'une quelconque des revendications 1 à 10, **caractérisé en ce que** les demi-éprouvettes sont formées dans un alliage à base de titane ou de nickel.

## Claims

1. A device (10) for testing a coating (36) capable of coating a turbomachine rotor blade root, said device comprising two test piece halves (32), each having a bearing surface (24) coated with said coating, one counter test piece (22) having two bearing surfaces (25), and a test machine comprising a first holding system (20) for holding the counter test piece (22) along a tensile axis (A), a second holding system (30) for holding the test piece halves (32) around the counter test piece (22), tensile means (14) for subjecting the holding systems to predetermined tensile cycles along the tensile axis, during which tensile strain is transmitted from one holding system to the other via the respective bearing surfaces (25, 24) contacting each other of the counter test piece and the test piece halves; said device being **characterized in that** the second holding system comprises resilient return means (40) allowing for the two test piece halves to open up in a direction perpendicular to the tensile direction in response to an opening force applied to these two test piece halves by the counter test piece during a tensile cycle.

2. The test device according to claim 1, **characterized in that** the side of the test piece halves (32) located on the side of the counter test piece (22) has no undercut.

3. The test device according to claim 1 or 2, **characterized in that** the bearing surfaces (24) of the test piece halves are sloping with respect to the tensile axis, so as to represent the shape of the bearing surfaces of a turbomachine rotor blade root.

4. The test device according to any of claims 1 to 3, **characterized in that** the bearing surfaces (25) of the counter test piece (22) are sloping with respect to the tensile axis, so as to represent the shape of the bearing surfaces of a turbomachine rotor disk tenon.

5. The test device according to any of claims 1 to 4, **characterized in that** said resilient return means comprise at least one bar (40) of resilient material, deforming while remaining in its range of elastic deformation during tensile cycles.

6. The test device according to any of claims 1 to 5, **characterized in that** the second holding system (30) comprises two posts (38) parallel to the tensile axis and used for holding the two test piece halves (32), said bar connecting these posts according to a direction perpendicular to the tensile axis.

7. The test device according to any of claims 1 to 6, **characterized in that** it further comprises means (18) for measuring the space between the test piece halves during testing.

8. The test device according to any of claims 1 to 7, **characterized in that** the test piece halves (32) have close to the bearing surfaces thereof a shape representing turbomachine rotor blade root halves, and the tensile axis is arranged substantially in the radial direction of the blade root halves.

9. The test device according to any of claims 1 to 8, **characterized in that** the counter test piece (22) has close to the bearing surfaces thereof a shape representing the shape of a tenon of a turbomachine rotor disk.

10. The test device according to any of claims 1 to 9, **characterized in that** the counter test piece is formed of a titanium or nickel base alloy.

11. The test device according to any of claims 1 to 10, **characterized in that** the test piece halves are formed of a titanium or nickel base alloy.

## Patentansprüche

1. Vorrichtung (10) zum Prüfen einer Beschichtung (36), die geeignet ist, einen Schaufelfuß eines Rotors einer Turbomaschine zu umhüllen, wobei die Vorrichtung zwei halbe Prüfkörper (32), wobei ein jeder eine mit der Beschichtung überzogene Auflagefläche (24) aufweist, einen Gegenprüfkörper (22), der zwei Auflageflächen (25) aufweist, sowie eine Prüfmaschine umfaßt, die ein erstes Haltesystem (20) zum Halten des Gegenprüfkörpers (22) entlang einer Zugachse (A), ein zweites Haltesystem (30) zum Halten der halben Prüfkörper (32) um den Gegenprüfkörper (22) herum, Zugmittel (14), um die Haltesysteme vorbestimmten Zugzyklen entlang der Zugachse zu unterziehen, während derer die Zugkraft über die jeweiligen in Kontakt befindlichen Auflageflächen (25, 24) des Gegenprüfkörpers und der halben Prüfkörper von einem Haltesystem auf das andere übertragen wird, umfaßt, wobei die Vorrichtung **dadurch gekennzeichnet ist, daß** das zweite Haltesystem elastische Rückstellmittel (40) umfaßt, die das Spreizen der beiden halben Prüfkörper in einer Richtung senkrecht zur Zugrichtung als Reaktion auf eine Spreizkraft, die während eines Zugzyklus durch den Gegenprüfkörper auf diese beiden halben Prüfkörper ausgeübt wird, zulassen.

2. Prüfvorrichtung nach Anspruch 1, **dadurch gekennzeichnet, daß** die Seite der halben Prüfkörper (32), die auf der Seite des Gegenprüfkörpers (22) liegt, keine Hinterschneidung aufweist.

3. Prüfvorrichtung nach Anspruch 1 oder 2, **dadurch gekennzeichnet, daß** die Auflageflächen (24) der halben Prüfkörper gegenüber der Zugachse schräg verlaufen, so daß sie für die Form der Auflageflächen eines Schaufelfußes eines Rotors einer Turbomaschine repräsentativ sind.

4. Prüfvorrichtung nach einem der Ansprüche 1 bis 3, **dadurch gekennzeichnet, daß** die Auflageflächen (25) des Gegenprüfkörpers (22) gegenüber der Zugsachse schräg verlaufen, so daß sie für die Form der Auflageflächen eines Zapfens einer Rotorscheibe einer Turbomaschine repräsentativ sind.

5. Prüfvorrichtung nach einem der Ansprüche 1 bis 4, **dadurch gekennzeichnet, daß** die elastischen Rückstellmittel wenigstens einen aus einem elastischen Material bestehenden Stab (40) umfassen, der sich während der Zugzyklen verformt und dabei in seinem Bereich elastischer Verformung bleibt.

6. Prüfvorrichtung nach einem der Ansprüche 1 bis 5, **dadurch gekennzeichnet, daß** das zweite Haltesystem (30) zwei Holme (38) umfaßt, die zur Zugachse parallel verlaufen und dazu dienen, die beiden halben Prüfkörper (32) zu halten, wobei der Stab diese Holme entlang einer zur Zugachse senkrechten Richtung verbindet.

7. Prüfvorrichtung nach einem der Ansprüche 1 bis 6, **dadurch gekennzeichnet, daß** sie ferner Mittel (18) zum Messen des Abstandes der halben Prüfkörper während der Prüfung umfaßt.

8. Prüfvorrichtung nach einem der Ansprüche 1 bis 7, **dadurch gekennzeichnet, daß** die halben Prüfkörper (32) in der Nähe ihrer Auflageflächen eine halbe Schaufelfüße eines Rotors einer Turbomaschine darstellende Form aufweisen und die Zugachse im wesentlichen entlang der radialen Richtung der halben Schaufelfüße angeordnet ist.

9. Prüfvorrichtung nach einem der Ansprüche 1 bis 8, **dadurch gekennzeichnet, daß** der Gegenprüfkörper (22) in der Nähe seiner Auflageflächen eine die Form eines Zapfens einer Rotorscheibe einer Turbomaschine darstellende Form aufweist.

10. Prüfvorrichtung nach einem der Ansprüche 1 bis 9, **dadurch gekennzeichnet, daß** der Gegenprüfkörper aus einer Legierung auf Titan- oder Nickelbasis gebildet ist.

11. Prüfvorrichtung nach einem der Ansprüche 1 bis 10, **dadurch gekennzeichnet, daß** die halben Prüfkörper aus einer Legierung auf Titan- oder Nickelbasis gebildet sind.
